# EUROPEAN PATENT APPLICATION

(11) **EP 3 689 791 A1**
(43) Date of publication of application: **05.08.2020**
(21) Application number: 18861834.2
(22) Date of filing: 06.07.2018
(51) Int. Cl.: B65G 1/137

(54) **PROJECTION INSTRUCTION DEVICE, PACKAGE SORTING SYSTEM, AND PROJECTION INSTRUCTION METHOD**

(30) Priority: 27.09.2017 JP 2017187202
(71) Applicant: Panasonic Intellectual Property Management Co., Ltd., Osaka-shi, Osaka 540-6207 (JP)
(72) Inventor: MORIYAMA Takaaki, Osaka-shi, Osaka 5406207 (JP); IDERA Takaaki, Osaka-shi, Osaka 5406207 (JP); OHTSUBO Shohji, Osaka-shi, Osaka 5406207 (JP)
(74) Representative: Eisenführ Speiser
(86) International application number: PCT/JP2018/025738
(87) International publication number: WO 2019/064805

(57) **Abstract**

There is provided a projection instruction device that generates a projection image to be projected on a parcel based on parcel identification information specifying the parcel, the device including: a processor; and a memory, in which by cooperating with the memory, the processor specifies a person in charge of processing the parcel or a destination of the parcel based on the parcel identification information to generate a person in charge instruction projection image indicating at least one of the person in charge or the destination of the parcel.

## Description

### TECHNICAL FIELD

The present disclosure is related to a projection instruction device, a parcel sorting system, and a projection instruction method useful to sort parcels.

### BACKGROUND ART

As recent economic activity rises, the amount of parcel circulation tends to increase. In a circulation process of parcels, sorting work for sorting the parcel by destination is a time-consuming process and relies on manual work from before, but a technology of automating at least a part of the sorting work is proposed.

PTL 1 discloses a system in which a moving parcel is tracked, an image to be displayed is determined based on information related to the parcel read from the parcel and information of a position of the parcel, and the image is projected from a projector to display the image on the parcel.

### Citation List

### Patent Literature

PTL 1: U.S. Patent No. 7090134

### SUMMARY OF THE INVENTION

Meanwhile, in recent years, the amount of parcel circulation has been increased more and more and types of parcels have also become various, so that a technology of effectively and precisely sorting the parcel is required.

The present disclosure is related to the technology of effectively and precisely sorting the parcel.

According to the present disclosure, there is provided a projection instruction device that generates a projection image to be projected on a parcel based on parcel identification information specifying the parcel, the device including: a processor; and a memory, in which by cooperating with the memory, the processor specifies a person in charge of processing the parcel or a destination of the parcel based on the parcel identification information to generate a person in charge instruction projection image indicating at least one of the person in charge or the destination.

According to the present disclosure, there is provided a parcel sorting system including: the projection instruction device described above; a label reader that reads the parcel identification information from a label attached to a parcel; an image sensor that images at least the parcel; and an image projection device that projects at least the person in charge instruction projection image on the parcel.

According to the present disclosure, there is provided a projection instruction method of generating a projection image to be projected on a parcel based on parcel identification information specifying the parcel, the method including: by causing a processor to cooperate with a memory, specifying a person in charge of processing the parcel or a destination of the parcel based on the parcel identification information to generate a person in charge instruction projection image indicating at least one of the person in charge or the destination.

According to the present disclosure, it is possible to more effectively and precisely sort parcels and to further deal with an increase in the amount of parcel circulation. In particular, by generating a projection image indicating a worker in charge of processing a parcel to project the projection image on the parcel, it is possible for the worker to more smoothly pick the parcel up and it is possible to improve work efficiency.

### BRIEF DESCRIPTION OF DRAWINGS

FIG. 1 is a block diagram illustrating a configuration of a parcel sorting system according to an embodiment.
FIG. 2 is a block diagram illustrating a configuration of a projection instruction device according to the embodiment.
FIG. 3A is a conceptual diagram illustrating a status in which the parcel sorting system is installed in a distribution center and is in operation.
FIG. 3B is a diagram illustrating a state in which a projection image including a number is projected on an upper surface of a parcel.
FIG. 4 is a diagram illustrating an example of a projection image generated by the projection instruction device according to the embodiment.
FIG. 5 is a flowchart illustrating an outline procedure of an operation mainly performed by the projection instruction device.
FIG. 6 is a conceptual diagram illustrating a status in which the parcel sorting system including the projection instruction device according to the embodiment is installed in a distribution center and is in operation.
FIG. 7 is a flowchart illustrating a procedure of generating and projecting a person in charge instruction projection image for indicating a worker in charge.

### DESCRIPTION OF EMBODIMENTS

Hereinafter, embodiments (hereinafter, referred to as "present embodiment") which specifically disclose a projection instruction device, a parcel sorting system, and a projection instruction method according to the present disclosure will be described in detail with reference to appropriate drawings. Meanwhile, in some cases, an unnecessarily detailed explanation may be omitted. For example, in some cases, a detailed explanation of already well-known items and a repetition explanation of substantially the same configuration may be omitted. This is to avoid unnecessary repetition of the following description and to facilitate understanding by those skilled in the art. The accompanying drawings and the following description are provided to enable those skilled in the art to fully understand the present disclosure and are not intended to limit a scope of the claims.

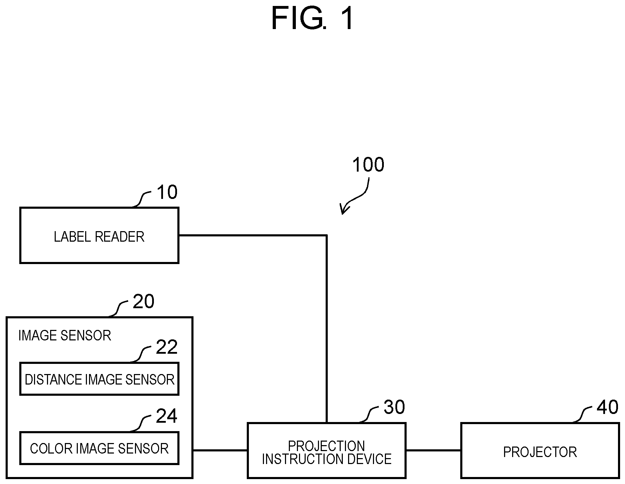

Hereinafter, the embodiments of the disclosure will be described with reference to FIGs. 1 to 6.

### [Configuration]

FIG. 1 is a block diagram illustrating a configuration of the parcel sorting system according to the embodiment. Parcel sorting system 100 illustrated in FIG. 1 is installed in, for example, a distribution center. Parcel sorting system 100 includes label reader 10, image sensor 20, projection instruction device 30, and projector 40. Parcel sorting system 100 is a system which supports work of a worker who sorts parcels transported by a transport conveyor. Parcel sorting system 100 is installed at the distribution center owned by, for example, a retailer, a wholesaler, an internet distributor, or the like. A parcel to be sorted generally has an approximately rectangular parallelepiped shape, but the outward shape of the parcel is not particularly limited, and a type of the parcel is also not particularly limited. The configuration of the parcel sorting system is not limited to the configuration illustrated in FIG. 1. For example, one label reader 10 may be connected with a plurality of image sensors 20, a plurality of projection instruction devices 30, and a plurality of projectors 40. The number of each component can be appropriately modified according to the purpose.

Label reader 10 as a reading device is a device which includes various components such as a lens (not illustrated), an image sensor, and the like. By using label reader 10, it is possible to read label recording information recording various types of information related to the parcel from a label attached to the parcel transported by the transport conveyor. By using the read label recording information, it becomes possible to specify the parcel. By the read information, parcel identification information is defined.

Image sensor 20 is an imaging device which includes various components such as a lens (not illustrated), an image sensor, and the like. Image sensor 20 is generally configured by an imaging camera. The imaging camera is a three-dimensional camera, a plurality of two-dimensional cameras, or the like. Image sensor 20 includes distance image sensor 22 and color image sensor 24.

Distance image sensor 22 images the parcel transported by the transport conveyor and generates a distance image. The generated distance image is used as information indicating a position of the parcel, a distance to the parcel, a size of the parcel, and the like. "Distance image" means an image including distance information indicating a distance from an imaging position to a position (including a surface of a parcel) indicated by each of pixels (that is, "image" in the present disclosure includes a distance image). In addition, a term of "distance image" includes one which cannot be recognized as an image by human eyes, such as a table or the like listing numerical values indicating a distance. That is, "distance image" may be information indicating a relationship between coordinates and a distance in the imaged region, and a data structure is not limited thereto. In the present disclosure, distance image sensor 22 is used for specifying the position of the parcel. Therefore, distance image sensor 22 also can be replaced with another sensing device (an ultrasonic sensor, an infrared sensor, a stereo camera, and a monocular video camera).

Color image sensor 24 images a parcel generated by the distance image and generates a color image. "Color image" refers to an image in which a color of a surface of a parcel is expressed with a predetermined gradation, and the "gradation" includes not only 256 gradations of RGB but also all kinds of grayscales or the like. Color image sensor 24 in the present disclosure is used for tracking each parcel, for the parcel specified by distance image sensor 22. Color image sensor 24 also can be replaced with another sensing device (an ultrasonic sensor, an infrared sensor, a stereo camera, and a monocular video camera).

That is, in the present disclosure, a term of "image" includes both of a distance image and a color image. In the present disclosure, information output from an image sensor as a sensing device including a distance image sensor and a color image sensor is referred to as sensing information. In the present embodiment, an example of the sensing device will be described by using image sensor 20 (including distance image sensor 22 and color image sensor 24). In addition, in the present embodiment, an example of the sensing information will be described by using a distance image output by distance image sensor 22 and a color image output by color image sensor 24.

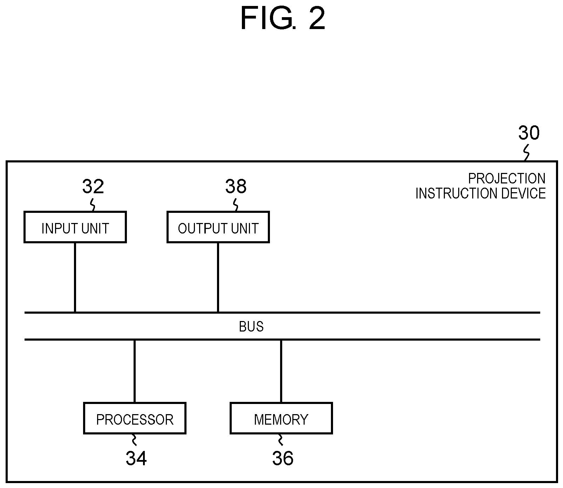

Projection instruction device 30 functions as a calculation device in parcel sorting system 100. As illustrated in FIG. 2, projection instruction device 30 includes input unit 32, processor 34, memory 36, and output unit 38 connected with one another via a bus. Input unit 32 receives parcel identification information for specifying a parcel obtained from the label recording information read by label reader 10, a distance image generated by distance image sensor 22, and a color image generated by color image sensor 24. Processor 34 is configured by a general calculation device and generates a projection image to be projected on a parcel based on the parcel identification information, the distance image, and the color image. Memory 36 as a storage device reads a control program necessary for various processes by processor 34 and performs an operation such as data backup. That is, processor 34 and memory 36 control various processes by projection instruction device 30 by cooperating with each other. Output unit 38 outputs the projection image generated by processor 34 to projector 40. In the present disclosure, "processor" does not mean only a single processor. "Processor" means an operator having a plurality of processors having an identical purpose, or a plurality of processors having different purposes in a case where they perform processes in collaboration with one another (for example, general-purpose central processing unit (CPU) and a graphic processing unit (GPU)).

Projector 40 is configured by a general projection device, and projects projection light including the projection image received from projection instruction device 30, on the parcel and displays the projection image onto the parcel.

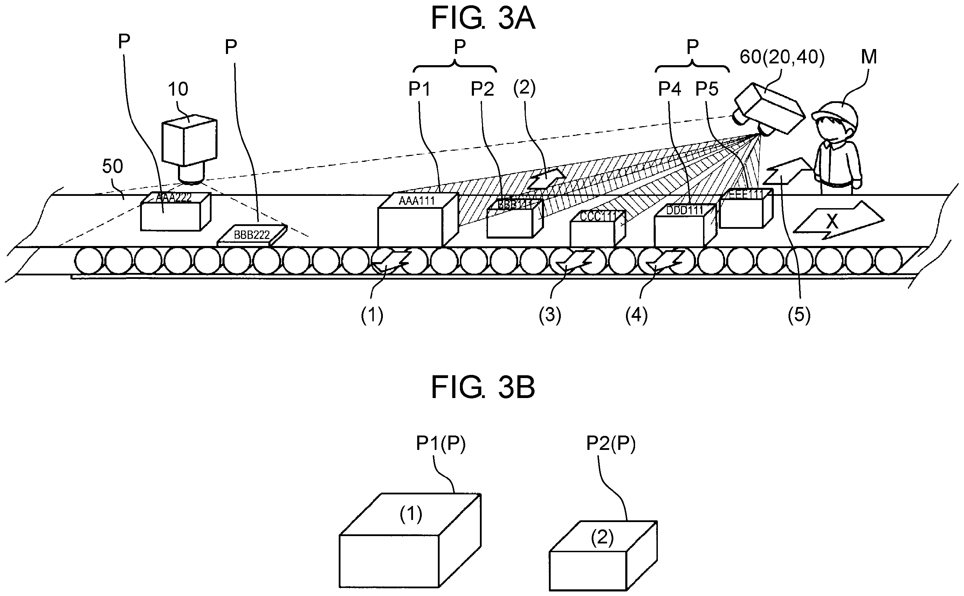

Parcel sorting system 100 can be configured to include label reader 10, image sensor 20 (distance image sensor 22 and color image sensor 24), projection instruction device 30, and projector 40 connected with one another in wired communication or in wireless communication. In addition, parcel sorting system 100 also can be configured to include two or more devices of any of label reader 10, image sensor 20, projection instruction device 30, and projector 40 as an integral device. For example, image sensor 20 and projector 40 can be combined to construct an integral imaging projection device (see FIG. 3A).

### [Outline of System]

FIG. 3A is a conceptual diagram illustrating a status in which parcel sorting system 100 is installed in the distribution center and is in operation. In the related art, each of workers M visually checks the label attached to each parcel P transported by transport conveyor 50 in the arrow X-direction. When the parcel to be delivered by the worker himself arrives, worker M needs to pick up the parcel and places the parcel once in the vicinity such as the worker's own feet, a basket, a truck bed. Meanwhile, in a case of visually sorting by the worker, there is a limit in work efficiency of the worker, so that it is necessary to limit a transport speed to a predetermined value or less. As a result, a limit value of the number of parcels which the worker can sort in a unit time, was few. In addition, due to an erroneous recognition when the worker visually checks the label, there is a possibility that an error may occur at the time of sorting. In recent years, the amount of parcel circulation has increased, and these problems receive more attention.

In the present embodiment, as illustrated in FIG. 3A, label reader 10 disposed above transport conveyor 50 reads the label attached to each parcel P transported by transport conveyor 50. In the label, the label recording information including various information related to the parcel is described. The label recording information includes information similar to a parcel identification number individually assigned to the parcel, a name, an address, and a telephone number of a sender, a name, an address, and a telephone number of a receiver, a parcel type, and the like. The label may be read by the worker in charge by manually placing a barcode reader as label reader 10 to a barcode in the label.

Further, image sensor 20 images the image (the distance image and the color image) of parcel P transported by transport conveyor 50 and obtains information such as a position of parcel P, a distance to parcel P, a size (lengths of three sides when parcel P is rectangular parallelepiped) of parcel P, a color of parcel P, a pattern of parcel P, and the like. Further, positions of label reader 10 and image sensor 20, a type of the sensing device, and an order of processes are not particularly limited to the illustrated embodiments. As described above, in the present example, image sensor 20 and projector 40 are configured as integrated imaging projection device 60 and are disposed above transport conveyor 50.

Projection instruction device 30 (not illustrated in FIGs. 3A and 3B) is configured by a computer disposed in, for example, the vicinity of transport conveyor 50 or another room and generates the projection image to be displayed on parcel P (for example, upper surface when parcel P is rectangular parallelepiped) based on the information, obtained by label reader 10, specifying the parcel and the distance image and the color image generated by image sensor 20. Projection instruction device 30 transmits a projection instruction to project the projection image on parcel P, to projector 40.

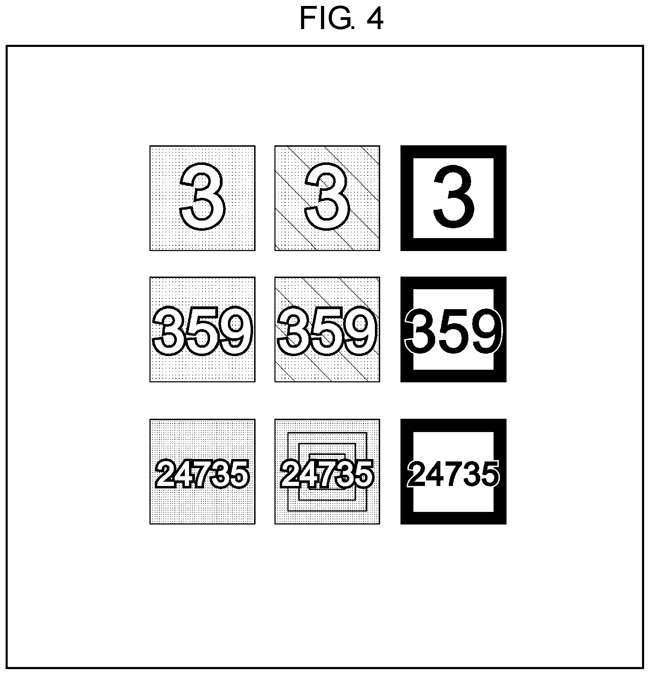

Projector 40 which receives the projection instruction, as an image projection device, projects projection light including the projection image generated by projection instruction device 30 on parcel P and displays the projection image on parcel P. Here, the projection image displayed on parcel P is, for example, an image of an encircled number having a color indicating a sorting location corresponding to a delivery address of parcel P (see FIG. 3B). Here, the encircled number corresponds to, for example, a number of a truck carrying sorted parcel P (a number of the truck itself, a parking lot number, or the like), a number of a shelf or a box to be carried into the truck, or the like. Further, instead of directly corresponding to the number such as the shelf or the box, the encircled number may correspond to a number of a shooter which moves the picked-up parcel to another location or a truck. Since a parking position of the truck or the like frequently changes according to a traffic condition or the like, it may be difficult to correspond to the sorting destination viewed from the periphery of transport conveyor 50 at any time. Therefore, the shooter is sandwiched between transport conveyor 50 and the transport truck, and a number of the shooter is projected on the periphery of transport conveyor 50, so that even if a configuration on the periphery of the transport conveyor 50 is not changed as needed, it is possible to deal with the change of the sorting destination by disposing an opening of the shooter. Certainly, according to a status, various types of projection images are displayed. Another example of displaying the number may be a zip code corresponding to the delivery address, a number of a worker who picks up parcel P, or the like. In addition, as an example of displaying information other than the number, an arrow indicating the sorting direction (such as right or left in a transport direction of transport conveyor 50) or characters (such as "left" and "right") may be used. Further, a display form is not limited to the encircled number, and various types such as numbers surrounded by squares ("3", "359", and "24735") as illustrated in FIG. 4 are conceivable. Furthermore, the projection image is not limited to numbers or characters enclosed with a frame, but may be white numbers or characters with a solid background. In addition, the shape of the number or character to be displayed such as a circle, a triangle, a square, or the like may be switched according to information to be displayed. Further, a picture capable of being individually associated with each information to be displayed may be displayed. The projection image is not limited to a still image, and may be an animation. As an example of the animation, the example described above may be blinked, enlarged or reduced, and a color may be changed. An animation reflecting the sorting direction may be projected. An example of the animations reflecting the sorting direction may include various patterns, for example, a moving light ray or light spot in the sorting direction, forming all or a part of the projection image in the sorting direction, changing the color, moving and displaying an arrow in the sorting direction, and the like. In a case where only a part of the projection image is a target of the animation, a part having a large influence on determination of the sorting destination by a worker, such as a number, an arrow, or the like, may be not changed, and a part not affected by the sorting destination such as a frame line may be changed. Meanwhile, in a situation in which it is more efficient to convey the sorting direction more intuitively than the meaning of the number or the like projected within the frame line, such as a case where there are few options for the sorting destination, a number, an arrow, or the like may be moved in the sorting direction within a fixed frame line. The animation may be repeatedly projected or may be projected only once. In the present disclosure, "image projection device" is not limited to a device which directly projects a light beam on the parcel. In the present disclosure, "image projection device" includes glasses which can display the image. That is, in the present disclosure, in a case of expressing as projecting projection light on the parcel, displaying the image on the parcel, projecting the image on the parcel, or the like, the expression also includes allowing the worker to recognize the image via the glasses capable of displaying the image in a pseudo manner as if the projection light is projected on the parcel. That is, in a case where the worker wears special glasses capable of displaying the image, the projection image of parcel P may be superimposed on the image of parcel P viewed via the glasses.

In FIG. 3A, worker M (omitted for other workers) in charge of picking up the parcel stands beside transport conveyor 50 and the parcel arriving each region is picked up from transport conveyor 50 as indicated by encircled number 1, encircled number 2, encircled number 3, or the like.

For example, parcel P1 has parcel identification information of "AAA111" on a label, and the parcel identification information of "AAA111" specifies that the parcel is a target to be sorted in region A. Here, when parcel P1 reaches the specific region, processor 34 transmits the generated projection image to projector 40 as illustrated in FIG. 3B. Projector 40 projects the projection image on parcel P1. The worker in the region can easily pay attention to parcel PI, to be picked up by the worker, which reaches the specific region of the worker, accordingly, the parcel can be sorted more efficiently and precisely.

In the present embodiment, as illustrated in FIG. 3A, whether or not one projector 40 projects the image on a plurality of specific regions may be switched and whether or not a plurality of projectors 40 project the image on each of the specific regions may be switched.

Hereinafter, in parcel sorting system 100 according to the embodiment, an outline of an operation of sorting the parcel performed by projection instruction device 30 will be described.

### [Outline of Operation]

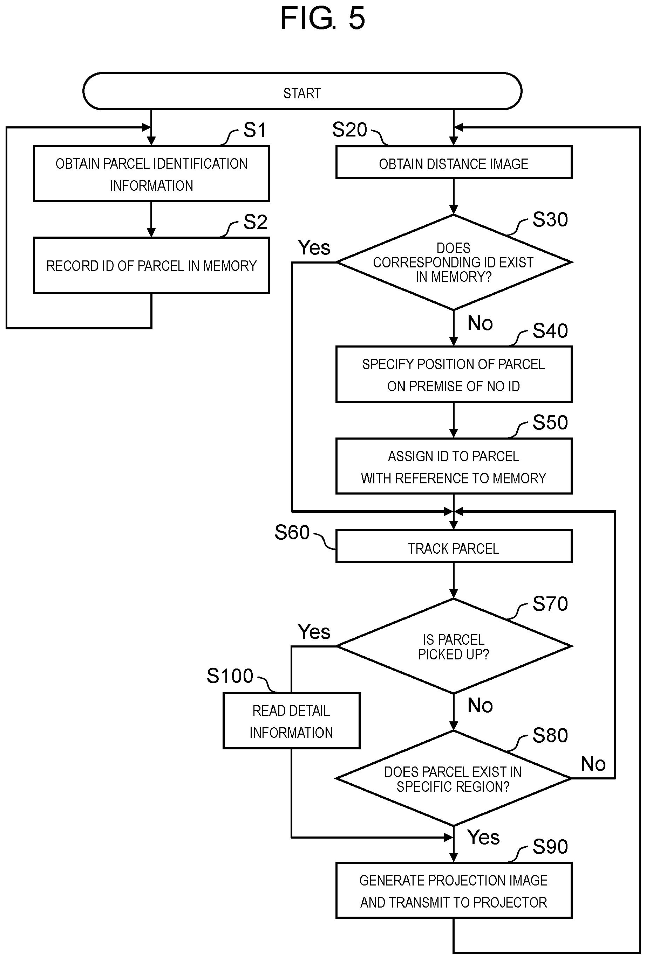

FIG. 5 is a flowchart illustrating an outline procedure of an operation of mainly performed by projection instruction device 30 of the present embodiment, particularly processor 34 of projection instruction device 30. First, after label reader 10 reads the label recording information of the label of the parcel, input unit 32 of projection instruction device 30 obtains the parcel identification information corresponding to the label recording information from label reader 10 (step S1). The parcel identification information is information including at least one piece of information similar to the parcel identification number individually assigned to the parcel, the name, the address, and the telephone number of the sender, the name, the address, and the telephone number of the receiver, the parcel type, and the like. For the parcel identification information, processor 34 assigns an ID as a parcel identification number specifying the parcel and records the ID and time information corresponding to a time at which the ID is assigned, in memory 36 (step S2). The ID recorded in memory 36 may be the parcel identification number originally recorded in the parcel identification information or may be assigned by projection instruction device 30 generating a new ID.

On the other hand, in parallel with step S1 and step S2, after distance image sensor 22 of image sensor 20 images the distance image of the parcel, input unit 32 of projection instruction device 30 obtains the distance image as the sensing information from distance image sensor 22 (step S20). Processor 34 determines whether or not the ID corresponding to the parcel existing in the distance image exists in memory 36.

An example of a method of determining whether or not the ID corresponding to the parcel existing in the distance image exists in memory 36 is as follows. That is, processor 34 calculates a time required for the parcel to move between label reader 10 and distance image sensor 22 by a distance (assumed to be known) between label reader 10 and distance image sensor 22 and a speed of transport conveyor 50. By subtracting the time from a time when the distance image is obtained, a time when the ID is assigned to the parcel existing in the distance image by label reader 10 (or processor 34) can be estimated. It can be estimated that the ID assigned close to the estimated time is the ID corresponding to the parcel existing in the distance image. In addition, as another example, a method of installing another distance image sensor in the vicinity of label reader 10 may be possible. That is, by tracking the parcel, to which the ID is assigned, by using another distance image sensor installed in the vicinity of label reader 10 since label reader 10 assigns the ID (or processor 34), a distance between the parcel (or the ID) and label reader 10 is measured for a time unit. Processor 34 can estimate the ID of the parcel in the distance image obtained in predetermined step S20 by the measured distance between the parcel (or the ID) and label reader 10, a distance of the parcel in the distance image obtained in step S20, and a distance (assumed to be known) between two distance image sensors.

In this manner, processor 34 determines whether or not the ID corresponding to the parcel included in the distance image exists in memory 36 (step S30). That is, as described in step S2, in memory 36, the parcel identification information, the ID, and the time information corresponding to a time when the ID is assigned are recorded in advance. On the other hand, as described above, for example, processor 34 subtracts the time required for the parcel to move between label reader 10 and distance image sensor 22 from the time when the distance image is obtained, a time when the ID is assigned to the parcel existing in the distance image by label reader 10 (or processor 34) can be estimated. Processor 34 compares the time information recorded in memory 36 in advance and the estimated time. In a case where the time information is close to the estimated time (for example, a case where a time difference is equal to or smaller than a predetermined threshold time), processor 34 can determine that the ID corresponding to the parcel included in the distance image exists in memory 36. In a case where it is determined that the ID corresponding to the parcel exists in memory 36 (Yes in step S30), the process moves to step S60 and subsequent steps.

In a case where it is determined that the ID corresponding to the parcel does not exist in memory 36 (No in step S30), on the premise that the ID is not assigned to the parcel, processor 34 specifies the position of the parcel again (step S40) and assigns the ID to the parcel (step S50).

In parallel with the above steps, color image sensor 24 generates a color image for each parcel of which a distance image is obtained. Processor 34 tracks the parcel, to which the ID is attached, transported and moved by transport conveyor 50 based on the color image from color image sensor 24 obtained by input unit 32 (step S60). Based on the color image likewise, processor 34 determines whether or not the worker picks up the tracked parcel (step S70). In a case where it is determined that the parcel is not picked up by the worker (No in step S70), processor 34 determines whether or not the parcel exists in a specific region (a predetermined sorting area in which the parcel is to be picked up) to be described below. In a case where it is determined that the parcel exists (reaches) in the specific region (Yes in step S80), processor 34 generates the projection image and transmits the projection image to projector 40 (step S90). In a case where it is not determined that the parcel exists (reaches) in the specific region (No in step S80), the process returns to step S60 and processor 34 continues to track the parcel.

In addition, in step S70, in a case where it is determined that the parcel is picked up by the worker (Yes in step S70), processor 34 reads detail information of the parcel from memory 36 (step S100), generates the projection image including the detail information, and outputs the projection image generated by output unit 38, to projector 40 (step S90). Projector 40 which obtains the projection image from projection instruction device 30, projects the projection image on the corresponding parcel.

The above is the outline of the operation procedure performed by processor 34 and the like of projection instruction device 30. Certainly, the operation procedure is not limited to that described above. For example, the determination in step S70 can be omitted. In addition, for the determination in step S70, it is possible to use contact determination between a hand of the worker and the parcel, a color image, a distance image, or the like. Next, a specific case of the present disclosure will be described.

### [Instruction about Worker in Charge for Parcel]

In general, plurality of workers M are located beside or in the vicinity of transport conveyor 50, and each worker picks up a parcel from the transport conveyor. The worker can visually recognize a parcel to be picked up by a projection image indicating the encircled numbers as illustrated in FIGs. 3A and 3B or the numbers surrounded by squares as illustrated in FIG. 4. The projection image described here is a projection image of specifying the parcel itself. Meanwhile, when the projection image can clearly indicate a worker of a parcel to be picked up, the worker can more easily notice the parcel and can pick the parcel up smoothly, which is considered to increase work efficiency.

Projection instruction device 30 according to the present disclosure is not limited to the projection image of specifying the parcel itself as illustrated in FIGs. 3A, 3B, and 4, and processes the parcel on which the projection image is projected, that is, specifies a worker (a worker in charge) of an operation of pick-up, and also generates a projection image indicating the worker in charge. Projection instruction device 30 projects the projection image on the parcel, so that it is easier for the worker to notice the presence of the parcel in charge and it is possible to smoothly pick up the parcel.

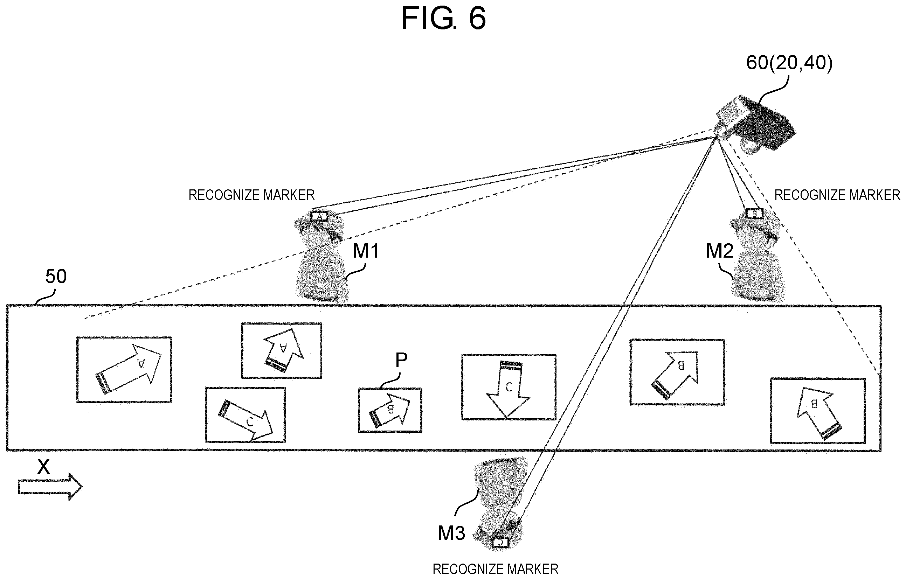

FIG. 6 is a conceptual diagram illustrating a status in which a parcel sorting system including projection instruction device 30 having various actions described above is installed in a distribution center and is in operation. A plurality (three) of workers M1, M2, and M3 are located beside transport conveyor 50, and each determines a parcel to be picked up, and in general, each worker is assigned a parcel to be in charge for each delivery address. For example, markers A, B, and C identifiable by image sensor 20 of integrated imaging projection device 60 are respectively given to workers M1, M2, and M3, and information such as a worker corresponding to each of markers A, B, and C, a delivery address assigned to the worker, and the like are stored in memory 36 of projection instruction device 30.

In the same manner as described in steps S1 and S2 in FIG. 5, label reader 10 reads label recording information of a label of the parcel, and input unit 32 of projection instruction device 30 obtains parcel identification information corresponding to the label recording information from label reader 10. The parcel identification information is information including a delivery address in addition to a parcel identification number individually assigned to the parcel, a name, an address, and a telephone number of a sender, a name, an address, and a telephone number of a receiver, a parcel type, and the like. For the parcel identification information, processor 34 of projection instruction device 30 assigns an ID as a parcel identification number for specifying the parcel and records the parcel identification information in memory 36.

By comparing the delivery address of the parcel identification information obtained from label reader 10 with the delivery address of a worker to which each of markers A, B, and C is assigned, processor 34 can specify the worker in charge for picking up a specific parcel. With this specification, processor 34 can generate, for the specific parcel, a person in charge instruction projection image indicating a person in charge for the parcel to be picked up. According to steps S20 to S80 in FIG. 5, processor 34 can track a parcel moving on transport conveyor 50, so that even if the parcel moves, it is possible to generate an appropriate person in charge instruction projection image corresponding to the parcel.

Projector 40 projects the person in charge instruction projection image, indicating the worker in charge of the parcel, generated by processor 34 on the parcel. In FIG. 6, an image of an arrow pointing in a direction of the worker in charge is generated as a person in charge instruction projection image. Here, since a position of the parcel and a position of each worker can be recognized by image sensor 20, it is easy to generate an image of the arrow pointing from the parcel to the worker in charge. Since it is sufficient if the image of the arrow roughly indicates the location of the worker in charge, strict accuracy is not required. Therefore, in a case where the worker in charge is temporarily lost, the direction of the previously projected arrow image may be used as it is. In addition, markers A, B, and C of the worker in charge are also assigned to the image of the arrow. Markers A, B, and C correspond to identification information (identification symbols) associated with each person in charge, and the person in charge instruction projection image also includes such identification information, so that each of workers M1, M2, and M3 can more easily determine the parcel to be picked up. Meanwhile, it is not required that the person in charge instruction projection image includes the identification information. Further, whether to include information such as other colors and numbers may be predetermined.

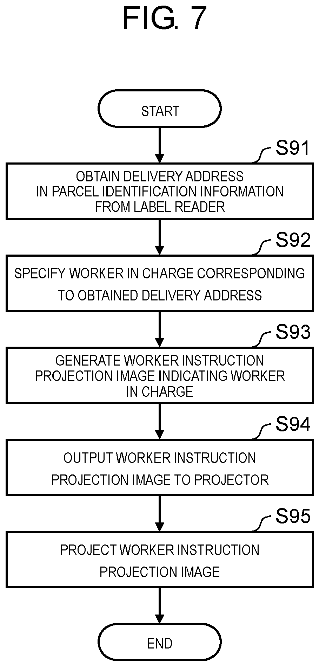

FIG. 7 illustrates a detailed process in step S90 in the flowchart of the outline procedure in FIG. 5. That is, in step S90 in FIG. 5 described above, processor 34 generates a projection image of specifying a sorting destination of a parcel, such as the numbers illustrated in FIGs. 3A, 3B, and 4. In the present embodiment, first, processor 34 obtains a delivery address in parcel identification information for a specific parcel from label reader 10 (step S91). Processor 34 specifies a worker in charge (a person in charge) of the parcel stored in memory 36 in advance (step S92). Processor 34 deforms the generated projection image so as to generate a person in charge instruction projection image (the arrow in FIG. 6) indicating a sorting destination or the like of the parcel and the worker in charge (step S93). Output unit 38 of projection instruction device 30 outputs the person in charge instruction projection image generated in step S93 by processor 34 to projector 40 (step S94). Projector 40 which obtains the person in charge instruction projection image from projection instruction device 30, projects the person in charge instruction projection image on the corresponding parcel (step S95). Even if the worker in charge moves, the person in charge instruction projection image continues to indicate the worker in charge.

In the example described above, the information such as the sorting destination of the parcel is included as the person in charge instruction projection image, but the present example is not limited thereto. If the worker in charge can recognize a sorting destination of the parcel by assigning work in advance, the sorting destination is replaced with a number indicating the sorting destination or the like of the parcel, information specifying the worker in charge, such as a name or an identification number of the worker in charge, may be included.

In the example described above, image sensor 20 identifies markers A, B, and C of each worker, but a type of the worker identification information such as markers A, B, and C is not particularly limited. Further, an angle or the like of image sensor 20 may be arranged so that, the worker may be directly identified without relying on a marker or the like by using a face authentication technology or the like. In addition, a dedicated image sensor may be provided separately from image sensor 20, and each worker may be specified by using marker identification, a face authentication technology, or the like. Further, an object to be recognized and identified may not be the worker, but may be a destination at which parcels are loaded (a destination of the parcel) such as a truck or a roll box pallet. In a case where both the worker and the destination of the parcel can be recognized and identified, an image indicating the worker and the destination of the parcel may be projected together, or only one of the worker and the destination of the parcel may be projected.

Further, in the example described above, the person in charge is specified by using the delivery address in the information included in the parcel identification information, but the person in charge may be specified by using other information of the parcel identification information. In addition, for a busy worker who processes many parcels, parcels to be turned around may be reduced. An association between the worker and the delivery address (other parcel identification information) may be stored in another database, and projection instruction device 30 may refer to the database. For example, at a specific timing (a start timing of parcel sorting system 100 or the like), a position at which a worker stands in the vicinity of transport conveyor 50 may be recognized by a camera or the like, and an association between the worker and the delivery address (other parcel identification information) may be determined and registered in the database.

In addition, according to the worker identification information such as markers A, B, and C described above, a person in charge itself is generally stored, but instead of the person in charge, an association between a delivery address (other parcel identification information) and a device such as a tag such as an RFID tag, a beacon, a smartphone, or the like, which has information indicating a position at which a parcel is processed (picked up), may be registered in the database. Further, a region (for example, every one meter or the like) in which each worker can work may be determined in advance, and a beacon or the like may be fixedly installed in each region in which the parcel is processed. Even with such a configuration, each worker can recognize a parcel to be processed by projecting an arrow image or the like (indicating the region) from the parcel toward the beacon. With this configuration, by associating the beacon and identification information of a worker in charge of a region indicated by the beacon in advance, the identification information for identifying the region itself indicated by the beacon is assigned. Therefore, image sensor 20 does not need to recognize the worker, and a processing load can be reduced. Further, with this configuration, there is no need to give a marker or a beacon to a worker, so that it is no longer necessary to force the worker to wear clothes with the marker or the like, and a risk of losing tags, beacons, and the like lent to the worker can be reduced. In the configuration in which a beacon or the like is provided for each region, even in a case where a worker in charge of the region is temporarily absent, there is a possibility that an image such as an arrow is generated as if there is a worker in charge. Therefore, in a case where it is not possible to recognize that the worker is in the region by using image sensor 20, an arrow image or the like indicating to another region may be projected. In addition, if parcel sorting system 100 recognizes coordinates of transport conveyor 50, it is possible to use this information to define a region for each worker. In this case, it is not necessary to provide a beacon or the like for each region. Parcel sorting system 100 recognizes at least coordinates of transport conveyor 50 in advance for tracking parcel P or the like. Therefore, according to a configuration of this modification example, a person in charge instruction projection image can be generated without adding new hardware, a marker, or the like to parcel sorting system 100. Here, a region assigned to each worker is defined by coordinates on transport conveyor 50, so that even if coordinates outside transport conveyor 50 are not recognized, the person in charge instruction projection image can be generated. In an actual environment, the worker is in a region outside transport conveyor 50, and there is a high possibility that the worker waits in the vicinity of transport conveyor 50 to sort parcels. For this reason, even if the region assigned to each worker is approximated by the coordinates of transport conveyor 50, there is no large shift in contents of the person in charge instruction projection image. If parcel sorting system 100 can also recognize coordinates in the vicinity of transport conveyor 50, the region of each worker in charge may be defined by using the coordinates outside transport conveyor 50.

In the example described above, the person in charge instruction projection image and the projection image indicating a sorting destination or the like of the parcel are integrally generated, but the present example is not limited thereto. Each image may be generated as a separate image. In this case, for example, an image of only a part of the arrow in the person in charge instruction projection image in FIG. 6 and the projection image for specifying the sorting destination of the parcel such as a number illustrated in FIGs. 3A, 3B, and 4 may be projected side by side.

Further, in a case where a worker in charge of a parcel is not found around, it is possible to project an error pattern indicating this to the parcel.

As a method to maintain track and an instruction for the worker, for example, a method of following a person indoors by using an RFID, a beacon, a smartphone, or the like or a person recognition by a camera can be used, and further, it is possible to improve accuracy by using clothes, hats, and the like (switching colors by a person, adding a marker, and the like) of the worker.

As described above, according to the present disclosure, a projection image indicating a worker in charge of picking up a parcel (for instructing a person in charge) is projected on the parcel, so that the worker in charge can easily notice the existence of the parcel in charge and can pick the parcel up smoothly. Meanwhile, the process flow in FIG. 5 and FIG. 7 described above is merely an example. A timing and an order of generating the projection image indicating the worker in charge, projecting the projection image, and the like may be predetermined. Further, when it is possible to project a person in charge instruction projection image, the worker in charge can pick the parcel up, and it is not required to project a parcel identification projection image for specifying the parcel itself.

Although the embodiment of a projection instruction device, a parcel sorting system, and a projection instruction method according to the present disclosure is described with reference to the drawings, the present disclosure is not limited to such an example. Those skilled in the art can conceive various modification examples, change examples, substitution examples, addition examples, deletion examples, and equivalent examples within the scope described in the claims and these rightly belong to the technical scope of the present disclosure.

### INDUSTRIAL APPLICABILITY

The present disclosure is useful to provide a projection instruction device, a parcel sorting system, and a projection instruction method capable of indicating a worker in charge for a parcel.

### REFERENCE MARKS IN THE DRAWINGS

- 10: LABEL READER
- 20: IMAGE SENSOR
- 22: DISTANCE IMAGE SENSOR
- 24: COLOR IMAGE SENSOR
- 30: PROJECTION INSTRUCTION DEVICE
- 32: INPUT UNIT
- 34: PROCESSOR
- 36: MEMORY
- 38: OUTPUT UNIT
- 40: PROJECTOR
- 50: TRANSPORT CONVEYOR
- 60: IMAGING PROJECTION DEVICE
- 100: PARCEL SORTING SYSTEM
- P: PARCEL

## Claims

1. A projection instruction device that generates a projection image to be projected on a parcel based on parcel identification information specifying the parcel, the device comprising:
a processor; and
a memory,
wherein by cooperating with the memory, the processor
specifies a person in charge of processing the parcel or a destination of the parcel based on the parcel identification information to generate a person in charge instruction projection image indicating at least one of the person in charge or the destination.

2. The projection instruction device of Claim 1,
wherein by cooperating with the memory, the processor
specifies the person in charge based on a delivery address included in the parcel identification information.

3. The projection instruction device of Claim 1 or 2,
wherein the person in charge instruction projection image is an image of an arrow pointing in a direction of the person in charge.

4. The projection instruction device of any one of Claims 1 to 3,
wherein the person in charge instruction projection image includes an identification symbol associated with the person in charge.

5. The projection instruction device of any one of Claims 1 to 4,
wherein identification information recognizable by an image sensor is assigned to each of the persons in charge, and
by cooperating with the memory, the processor
recognizes the person in charge based on the identification information recognized by the image sensor to generate the person in charge instruction projection image.

6. The projection instruction device of Claim 5,
wherein by cooperating with the memory, the processor
specifies a position of the person in charge based on the identification information.

7. The projection instruction device of Claim 1,
wherein a region for processing the parcel is determined in advance for the person in charge,
by cooperating with the memory, the processor
generates a projection image indicating the region as the person in charge instruction projection image.

8. The projection instruction device of Claim 7,
wherein identification information identifying the region is assigned to each of the regions, and
by cooperating with the memory, the processor
recognizes the region based on the identification information to generate the person in charge instruction projection image.

9. A parcel sorting system comprising:
the projection instruction device of any one of Claims 1 to 8;
a label reader that reads the parcel identification information from a label attached to a parcel;
an image sensor that images at least the parcel; and
an image projection device that projects at least the person in charge instruction projection image on the parcel.

10. A projection instruction method of generating a projection image to be projected on a parcel based on parcel identification information specifying the parcel, the method comprising:
by causing a processor to cooperate with a memory,
specifying a person in charge of processing the parcel or a destination of the parcel based on the parcel identification information to generate a person in charge instruction projection image indicating at least one of the person in charge or the destination.
